# EUROPÄISCHE PATENTSCHRIFT

(11) **EP 0 358 928 B1**
(45) Veröffentlichungstag und Bekanntmachung des Hinweises auf die Patenterteilung: **15.12.1993**
(21) Anmeldenummer: 89114431.3
(22) Anmeldetag: 04.08.1989
(51) Int. Cl.: B21D 43/10, B23Q 7/04, B30B 1/18

(54) **Werkzeugmaschine**
Machine-tool
Machine-outil

(30) Priorität: 13.09.1988 DE 3831158
(43) Veröffentlichungstag der Anmeldung: 21.03.1990
(73) Patentinhaber: Arnold Müller GmbH & Co. KG, D-73230 Kirchheim (DE)
(72) Erfinder: Müller, Arnold, D-7312 Kirchheim/Teck (DE); Vogt, Günther, Dr.-Ing., D-7312 Kirchheim/Teck (DE)
(74) Vertreter: Kratzsch, Volkhard, Dipl.-Ing.

(56) Entgegenhaltungen:
- EP-A- 0 028 735
- EP-A- 0 047 056
- EP-A- 0 090 357
- EP-A- 0 106 244
- DE-A- 1 902 277
- DE-A- 2 001 357
- DE-A- 3 841 852
- DE-A- 3 841 852
- DE-B- 1 918 637
- DE-B- 2 364 718
- DE-B- 2 456 729
- DE-C- 838 986
- FR-A- 1 375 902
- GB-A- 1 106 852
- SE-B- 456 877
- PATENT ABSTRACTS OF JAPAN; Band 10, Nr. 118 (M-475)(2175), 2. Mai 1986 & JP-A-60247496 (MITSUBISHI DENKI K.K.) 07.12.1985
- PATENT ABSTRACTS OF JAPAN ; Band 11, Nr. 90 (M-573)(2537), 20 März 1987 & JP-A-61242797 (MITSUBISHI ELECTRIC CORP.) 29.10.1986
- PATENT ABSTRACTS OF JAPAN, Band 8, Nr. 158 (M-311)(1595), 21 Juli 1984 & JP-A-59053103 (KIRIYUU KIKAI) 27.03.1984
- WERKSTATTSTECHNIK Band 73, Nr. 3, März 1983, Seiten 169-173, Würzburg, DE, G. STUTE et al.: "Spindasyn, ein neuer elektromechanischer Linearantrieb für NC-Werkzeugmaschinen".

## Beschreibung

Die Erfindung bezieht sich auf eine Werkzeugmaschine, insbesondere elektromotorische Presse, der im Oberbegriff des Anspruchs 1 genannten Art.

Es ist eine Werkzeugmaschine dieser Art bekannt (DE-A-19 02 277), die als Spindelpresse mit zwei zueinander parallelen oder auch mehr Spindeln ausgebildet ist. Die beiden Spindeln sind in vertikaler Anordnung drehfest im Maschinengestell gehalten. Sie führen von einer oberen Brücke des Maschinengestells nach unten bis in den unteren Tisch hinein, wo die Spindeln axial festgelegt sind. Die zwei Spindeln sind auf einem Längenabschnitt mit gegenläufigem Steilgewinde versehen. Die Presse weist als Pressenstempel einen vertikal beweglichen Stößel auf, der über beidseitige druckmittelbetriebene Arbeitszylinder in vertikaler Richtung betätigt wird, statt dessen aber auch durch Reibscheiben, Kupplungen oder direkt elektrisch angetrieben werden kann. Der vertikal betätigte Stößel enthält im Inneren je Spindel eine Spindelmutter, die im Stößel drehbar gelagert ist. Auf den Spindelmuttern sind als Zahnräder ausgebildete Schwungscheiben fest verkeilt, deren Verzahnungen ineinandergreifen. Die Wirkungsweise der Presse ist folgendermaßen. Im oberen Totpunkt drücken die am Pressenstößel angreifenden Kolben der Arbeitszylinder bei Druckbeaufschlagung der Kolben den Pressenstößel nach unten. Da die beiden Spindeln sich nicht drehen können, geraten die Spindelmuttern in Drehung und mit diesen die beiden Schwungräder. Beim Aufeinandertreffen der Gesenke zwischen dem Pressenstößel und dem Maschinentisch wird die Energie der Schwungräder in Umformarbeit umgesetzt. Für eine anschließende Aufwärtsbewegung des Pressenstößels wird die andere, unten befindliche Seite der Kolben der Arbeitszylinder mit Druckmittel beaufschlagt, so daß über die Arbeitszylinder der Pressenstößel nach oben bewegt wird. Der Antrieb des Pressenstempels in Preßrichtung und gegensinnig dazu erfolgt somit über eine besondere Antriebseinrichtung, die am Pressenstempel angreift und sich zwischen diesem und dem Maschinenteil erstreckt. Die auf den undrehbaren Spindeln sitzenden und bei der Bewegung des Pressenstempels in Drehung versetzten Spindelmuttern dienen mit ihren Schwungrädern allein dazu, Schwungenergie zu liefern.

In der EP-A-00 28 735 ist eine Werkzeugmaschine mit vertikaler Spindel beschrieben, die über einen Motor drehantreibbar ist. Die Maschine weist an einer Seite ein Handhabungsgerät auf, welches einen längs einer vertikalen Führung der Werkzeugmaschine auf und ab verfahrbaren Schlitten und am Schlitten einen um eine lotrechte Achse mittels eines Motors schwenkbetätigbaren Arm aufweist, der teleskopierbar ist. Am Arm ist ein drehbarer Greifer angebracht. Der Schlitten ist relativ zur Maschine mittels eines Antriebes auf und ab verfahrbar. Dieser Antrieb weist eine von einer Antriebseinrichtung drehangetriebene vertikale Spindel auf, die den Schlitten durchsetzt, und ferner eine Spindelmutter im Schlitten, in die die Spindel eingreift. Bei Drehbetätigung der Spindel in einer Drehrichtung wird der Schlitten in vertikaler Richtung nach oben verschoben und bei Drehbetätigung der Spindel in anderer Drehrichtung nach unten. Das Handhabungsgerät ist in der Lage, von einem Vorrat ein Werkstück zu nehmen und zum Arbeitstisch unterhalb der Maschinenspindel zu transportieren und das Werkstück wieder zum Vorrat zurück zu transportieren. Ferner ist das Handhabungsgerät in der Lage, statt eines Werkstückes ein Werkzeug von einem Magazin zur Maschinenspindel und zurück zu bringen.

Der Erfindung liegt die Aufgabe zugrunde, eine Werkzeugmaschine, insbesondere elektromotorische Presse, der eingangs genannten Art zu schaffen, bei der möglichst einfache, kostengünstige und baukastenartige Elemente zum Einsatz kommen können und die bei der Ausbildung als Presse bei niedriger Motorleistung außerordentlich große Preßkräfte ermöglicht.

Die Aufgabe ist bei einer Werkzeugmaschine der eingangs genannten Art gemäß der Erfindung durch die Merkmale im Kennzeichnungsteil des Anspruchs 1 gelöst. Hierdurch lassen sich bei kleiner Leistung des Elektromotors außerordentlich große Kräfte erzielen. Wenn die Werkzeugmaschine als Presse ausgebildet ist, ergeben sich somit bei niedriger Motorleistung außerordentlich große Preßkräfte. Aufgrund des Planetengetriebes ist die Drehmomentwandlung vergrößert. Bei allem ist die Werkzeugmaschine außerordentlich einfach und kostengünstig. Vorteilhafte Ausgestaltungen ergeben sich aus den Ansprüchen 2 bis 9.

Vorteilhafte Weiterbildungen der Werkzeugmaschine enthalten die Ansprüche 10 bis 22. Dadurch, daß die Werkzeugmaschine mit an einer Seite oder an beiden Seiten plazierten Handhabungsgeräten zu einer Baueinheit vereinigt ist, ergibt sich in besonders einfacher, kompakter, platzsparender und kostengünstiger Bauweise eine Arbeitseinheit, die einen kompletten, vollautomatisch gesteuerten Arbeitsablauf ermöglicht. So ist dadurch erreicht, daß in der Werkzeugmaschine zu behandelnde Werkstücke vom auf einer Seite plazierten Handhabungsgerät zugeführt und in den Arbeitsbereich der Werkzeugmaschine eingebracht werden können und nach Bearbeitungsvorgang von dem Handhabungsgerät auf der anderen Seite aus dem Arbeitsbereich der Maschine entnommen und abgeführt, z.B. zu irgendeiner benachbarten Station, Transporteinrichtung od.dgl., weitergegeben werden können. Daraus wird ersichtlich, daß damit auch die Möglichkeiten für eine "wandernde" Weiterreichung von Werkstücken erschlossen ist, und dies mit einfachen und kostengünstigen Mitteln, da hierzu Werkzeugmaschinen gemäß der Erfindung baukastenartig lediglich aneinanderzureihen sind. Von Vorteil ist dabei, daß die Handhabungsgeräte bei diesen Arbeitsabläufen nicht innerhalb des Arbeitsbereichs der Maschine verbleiben und dort störend im Wege sind. Ähnlich menschlichen Armen schwenken diese vielmehr nach der Zufuhr bzw. Abfuhr des Werkstücks aus dem Arbeitsbereich heraus. Bei allem ist die Werkzeugmaschine einfach, kompakt und kostengünstig. Sie läßt sich aus baukastenartigen Elementen aufbauen und zu verketteten Einheiten baukastenartig erweitern.

Weitere vorteilhafte Ausgestaltungen ergeben sich aus den Ansprüchen 23 bis 34. Eine derartige Werkzeugmaschine ist außerordentlich einfach, platzsparend, leicht und kostengünstig. Dabei sind extreme Leistungen, z.B. bis hin zu 50 Tonnen Preßkraft, erreichbar. Aufgrund des Spindelantriebes ist auch eine Steuerung dergestalt möglich, daß mittels des Pressenstempels z.B. ein Hämmern erreichbar ist, z.B. für Nietvorgänge, wobei eine Frequenz durchaus in der Größenordnung zwischen etwa 400 und 500 Takten pro Minute möglich ist. Von Vorteil ist ferner, daß die Maschine im Bereich des Tisches keinerlei Besonderheiten und zusätzliche Elemente aufweisen muß. Weder sind dort nach an sonstiger Stelle Anschläge od.dgl. zur Begrenzung des z.B. beim Pressen zu durchfahrenden Weges notwendig. Statt dessen ist es möglich, mittels des elektromotorischen Spindelantriebes` z.B. einer Drehzahlregelung mit Wegmessung, zunächst im Eilgang und somit schnell den Weg bis hin zur vorgegebenen Position zu durchlaufen, woraufhin bei Erreichen dieser vorgegebenen Pressenstempelposition automatisch über entsprechende Steuerung mit Mikroprozessor die Umschaltung auf Drehmomentregelung erfolgt, um nun den jeweils benötigten Preßdruck zu erzeugen. Durch die steuerungstechnische Wegbegrenzung erfolgt nach Durchlaufen des vorgegebenen Weges beim Pressen selbsttätig die Abschaltung des Spindelantriebes, ohne daß es dazu irgendwelcher Anschläge bedarf. Der Spindelantrieb macht es möglich, mit jeweils frei zu wählendem Drehmoment auf Position zu fahren. Somit ist also in allen Positionen eine Anpassung des Drehmoments erreicht.

Die erfindungsgemäße Werkzeugmaschine ist im übrigen vielfältig einsetzbar. Sie ist u.a. auch in der Ausgestaltung als elektromotorische Presse als Richtpresse verwendbar, z.B. zum Richten von Achsen, Wellen od.dgl. Es bedarf hierzu lediglich einer Aufnahme zur horizontalen Aufnahme des Werkstückes, z.B. endseitig zwischen zwei Spitzen, wobei die Aufnahme auf dem Maschinentisch Platz hat. Sodann kann im Bereich der Aufnahme der jeweilige Fehler, z.B. Formfehler, ermittelt werden. Die betreffenden Daten werden der Steuereinheit für die Werkzeugmaschine zugeführt, woraufhin selbsttätig durch Aktivierung der Presse der jeweilige Fehler, z.B. Formfehler, an der ermittelten Stelle beseitigt wird. Auch vielfältige andere Aufgaben lassen sich mittels der erfindungsgemäßen Werkzeugmaschine in einfacher und kostengünstiger Weise und dabei hochpräzis lösen.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Werkzeugmaschine in Form einer elektromotorischen Presse,
- Fig. 2: eine schematische Draufsicht der Werkzeugmaschine in Fig. 1,
- Fig. 3: eine schematische Draufsicht etwa entsprechend derjenigen in Fig. 2 einer Werkzeugmaschine gemäß einem zweiten Ausführungsbeispiel,
- Fig. 4: eine schematische Darstellung einer Steuereinheit der Werkzeugmaschine,
- Fig. 5: eine schematische Seitenansicht einer Werkzeugmaschine gemäß einem dritten Ausführungsbeispiel,
- Fig. 6: eine schematische Ansicht der Werkzeugmaschine in Pfeilrichtung VI in Fig. 5,
- Fig. 7: einen schematischen axialen Schnitt des Antriebes der Werkzeugmaschine in Fig. 5 und 6,
- Fig. 8: eine schematische Perspektivdarstellung von Teilen des Planetengetriebes des Antriebes in Fig. 7.

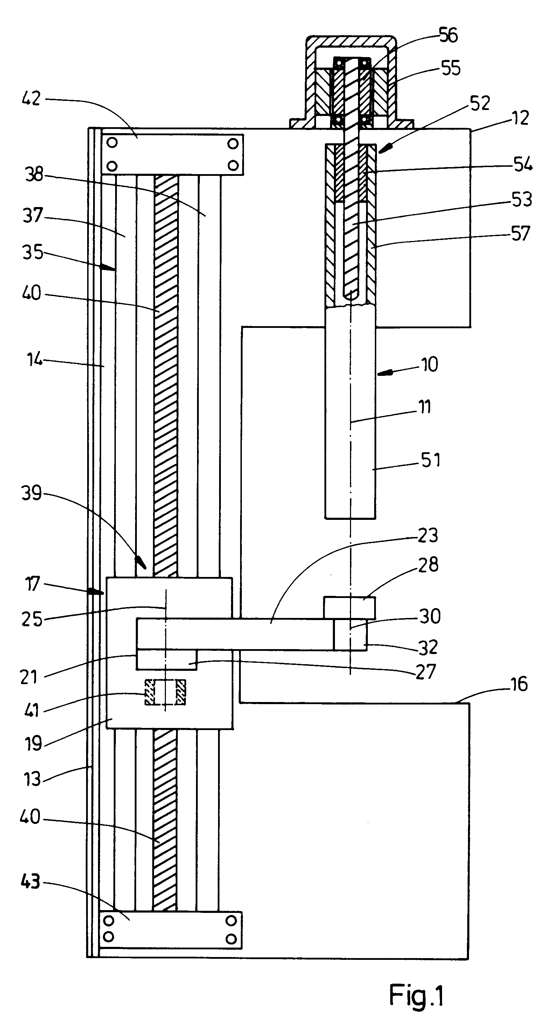

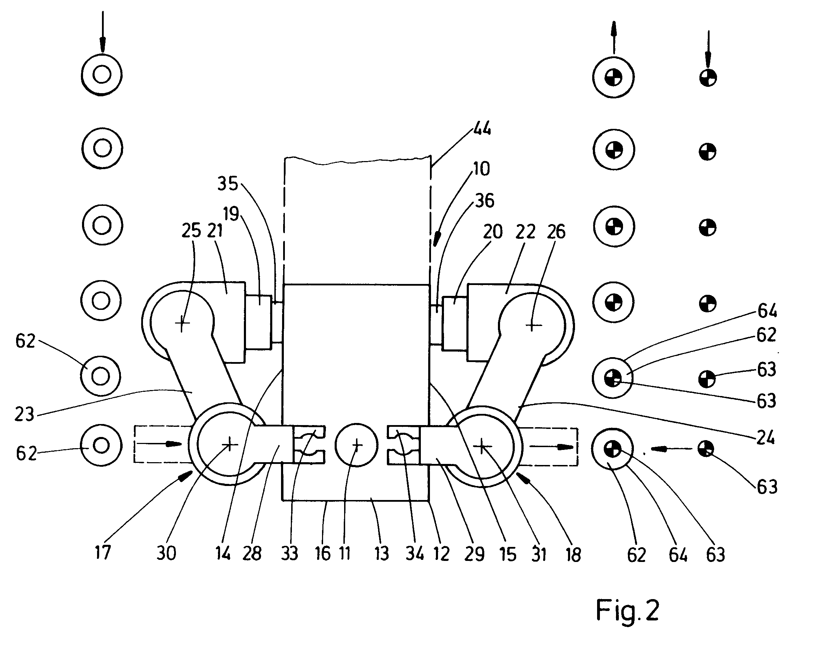

In Fig. 1 und 2 ist im wesentlichen schematisch eine Werkzeugmaschine 10 mit vertikaler Arbeitsachse 11 gezeigt. Die Werkzeugmaschine 10 kann verschiedenster Art sein, z.B. als Bohrmaschine, Fräsmaschine oder ähnliches ausgebildet sein. Beim gezeigten Ausführungsbeispiel ist die Werkzeugmaschine 10 gemäß der Erfindung als besondere elektromotorische Presse 12 ausgebildet. Einzelheiten dieser werden später noch näher erläutert.

Die Werkzeugmaschine 10 weist ein z.B. kastenförmiges und in vertikaler Richtung aufragendes Maschinengehäuse 13 mit beidseitigen Außenseiten 14 und 15 auf. Dazwischen befindet sich im Bereich der Arbeitsachse 11 ein hier nur schematisch angedeuteter Tisch 16. An jeder lotrechten Außenseite 14, 15 ist mindestens ein Handhabungsgerät 17 bzw. 18 angeordnet. Jedes Handhabungsgerät 17, 18 weist zumindest einen Schlitten 19 bzw. 20 auf, der in zur Arbeitsachse 11 zumindest im wesentlichen paralleler Richtung am Maschinengehäuse 13 verschiebbar und in der jeweils gewünschten Position positionierbar ist. Der Schlitten 19, 20 trägt an einer schlittenseitigen Halterung 21 bzw. 22 einen Schwenkarm 23 bzw. 24, der um eine zur Arbeitsachse 11 zumindest im wesentlichen parallele lotrechte Achse 25 bzw. 26 und je nach Abmessung z.B. bis in den Bereich der Arbeitsachse 11 und in den Arbeitsbereich der Maschine hinein schwenkbar ist. Zur Schwenkbetätigung des Schwenkarmes 23, 24 um die Achse 25 bzw. 26 dient eine zwischen der Halterung 21, 22 und dem zugeordneten Schwenkarm 23 bzw. 24 angeordnete, etwa kapselförmige Antriebseinrichtung, die lediglich in Fig. 1 für den Schwenkarm 23 sichtbar und dort mit 27 bezeichnet ist.

Am freien Ende des jeweiligen Schwenkarmes 23 bzw. 24 ist ein zweiter Schwenkarm 28 bzw. 29 um eine zugeordnete Achse 30 bzw. 31 schwenkbar gehalten, wobei diese Achse zumindest im wesentlichen parallel zur Achse 25 bzw. 26 verläuft. Zwischen dem ersten Schwenkarm 23 und dem zweiten Schwenkarm 28 ist analog der Antriebseinrichtung 27 eine entsprechende Antriebseinrichtung 32 angeordnet, mittels der die Relativschwenkung des zweiten Schwenkarmes 28 in Bezug auf den ersten Schwenkarm 23 um die Achse 30 erfolgt. Die Antriebseinrichtung 32 ist lediglich in Fig. 1 und dort nur schematisch angedeutet. Eine entsprechende Antriebseinrichtung ist beim in Fig. 2 rechten Handhabungsgerät 18 zwischen dessen ersten Schwenkarm 24 und zweiten Schwenkarm 29 angeordnet. Die Antriebseinrichtungen 27 sowie 32 und die entsprechenden Antriebseinrichtungen des in Fig. 2 rechten Handhabungsgerätes 18 weisen einen nicht weiter gezeigten elektromotorischen Schwenkantrieb, vorzugsweise mit integriertem Getriebe, auf.

Beim ersten Ausführungsbeispiel mit den beidseitigen zweiarmigen Handhabungsgeräten 17, 18 ist die Anordnung so getroffen, daß der zweite Schwenkarm 28 bzw. 29 bis in den Bereich der Arbeitsachse 11 und in den Arbeitsbereich der Maschine hinein schwenkbar ist. Am freien Ende des zweiten Schwenkarmes 28, 29 sitzt ein nur schematisch angedeuteter Greifer 33 bzw. 34, mittels dessen z.B. zu handhabende Werkstücke erfaßbar sind. Jeder Greifer 33, 34 ist z.B. als Greifzange ausgebildet. Beim in Fig. 2 links angeordneten Handhabungsgerät 17 ist über die Antriebseinrichtung 27 der Schwenkarm 23 und über die Antriebseinrichtung 32 der Schwenkarm 28 mit endseitigem Greifer 33 daran um die jeweils zugeordnete Achse 25 bzw. 30 schwenkbetätigbar und ferner in der jeweils gewünschten Position positionierbar.

Der jeweilige Schlitten 19, 20 ist auf der Außenseite 14 bzw. 15 längs einer Vertikalführung 35 bzw. 36 verschiebbar gehalten und geführt, die seitlich am Maschinengehäuse 13, dabei innen oder außen, plaziert ist. Einzelheiten der Vertikalführung sind in Fig. 1 bezüglich der linken Vertikalführung 35 zu sehen. Die Vertikalführung 35 weist danach z.B. zwei vertikale und mit Querabstand voneinander befestigte Führungsstangen 37 und 38 auf, die den Schlitten 19 durchsetzen und längs denen letzterer verschiebbar gehalten und geführt ist, wobei die Führungsstangen 37, 38 zugleich auch z.B. horizontale Kräfte aufnehmen. Weitere Einzelheiten des Schlittens 19 mit Handhabungsgerät 17 sind nachfolgend ebenfalls anhand von Fig. 1 erläutert, wobei diese Beschreibung auch für den anderen Schlitten 20 mit Handhabungsgerät 18 gilt, da diese gleich ausgebildet sind.

Der Schlitten 19 weist einen Linearantrieb 39 auf, der als elektromotorisch betätigter Spindelantrieb mit Spindel 40 und Spindelmutter 41 ausgebildet ist, die in Fig. 1 nur gestrichelt und nur schematisch angedeutet ist. Bei diesem Ausführungsbeispiel ist die Spindelmutter 41 im Schlitten 19 drehbar gelagert, wobei sie vom dazu koaxialen Rotor eines Elektromotors umlaufend angetrieben wird, der am oder im Schlitten 19 angeordnet ist und der besseren Übersicht wegen nicht besonders dargestellt ist. Die Spindelmutter 41 ist z.B. im Inneren des Rotors des Elektromotors angeordnet und drehfest mit diesem Rotor verbunden. Die Spindel 40 dagegen ist undrehbar am Maschinengehäuse 13 gehalten, z.B. in oberen und unteren Querträgern 42, 43, die zugleich die dortigen Enden der Führungsstangen 37 und 38 aufnehmen. Der am oder im Schlitten 19 angeordnete Elektromotor besteht aus einem Drehstrommotor,und hierbei insbesondere aus einem Asynchronmotor. Der Linearantrieb 39, insbesondere Elektromotor, ist mit einer Drehmoment- und/oder Drehzahlregelung versehen, die hier nicht weiter dargestellt ist. In Fig. 2 ist gestrichelt angedeutet, daß z.B. rückseitig der Werkzeugmaschine 10 eine weitere Werkzeugmaschine 44 etwa baukastenmäßig angesetzt sein kann, die ebenfalls im Arbeitsbereich der beiden Handhabungsgeräte 17 und 18 steht, so daß beide Handhabungsgeräte 17, 18 auch dieser Werkzeugmaschine 44 zugeordnet sind und auch diese Werkzeugmaschine 44 bedienen können.

Bei einem anderen, nicht gezeigten Ausführungsbeispiel ist der Linearantrieb etwa kinematisch umgekehrt gestaltet. Hierbei ist die Spindel 40 z.B. mittels eines am oberen Querträger 42 angebrachten Elektromotors umlaufend angetrieben und dabei in beiden Querträgern 42, 43 drehbar gelagert. Der Schlitten 19 trägt in diesem Fall lediglich die Spindelmutter 41, die dann drehfest am Schlitten 19 angebracht ist.

Statt der in Fig. 2 gezeigten endseitigen Greifer 33, 34 können bei einem anderen, nicht gezeigten Ausführungsbeispiel auch andere Hilfsmittel, Handhabungseinrichtungen oder auch Bearbeitungseinheiten, z.B. Bohreinheiten, Fräseinheiten od.dgl., angebracht sein, die mittels des jeweiligen Handhabungsgerätes 17 bzw. 18 um die Achsen 25, 30 bzw. 26, 31 nach vorgegebenem Programm in Position geschwenkt und durch Höhenverstellung über den jeweiligen Schlitten 19 bzw. 20 auch in der Höhe in Position gebracht werden können.

Die Werkzeugmaschine 10 ist in erfindungsgemäßer Weise als elektromotorische Presse 12 ausgebildet, deren Pressenstempel 51 mit vertikaler Arbeitsachse 11 mittels eines Spindelantriebes 52 betätigbar ist, der eine Spindel 53 und eine Spindelmutter 54 aufweist. Der Spindelantrieb 52 ist mit einem elektrischen Antriebsmotor 55 versehen, der bei der schematischen Darstellung in Fig. 1 der besseren Übersicht wegen auf dem Maschinengehäuse 13 obenauf plaziert ist. Es versteht sich gleichwohl, daß der Antriebsmotor 55 auch im Maschinengehäuse 13, von außen unsichtbar, angeordnet sein kann. Der elektrische Antriebsmotor 55 treibt die Spindel 53 umlaufend an, wobei dies unmittelbar, wie gezeigt, oder auch über ein Getriebe erfolgen kann. Beim gezeigten Ausführungsbeispiel ist der elektrische Antriebsmotor 55 koaxial zur Spindel 53 angeordnet, wobei der Rotor 56 des Antriebsmotors 55 unmittelbar drehfest mit der Spindel 53 verbunden ist, die in den Rotor 56 zumindest hineingeführt oder durch diesen über dessen ganze Länge hindurchgeführt ist. Der Pressenstempel 51 ist zumindest auf dem oberen Teil seiner Länge als Hohlrohr 57 ausgebildet. Er enthält im Inneren die Spindelmutter 54, die daran drehfest angebracht ist. Die Spindel 53 greift somit durch die Spindelmutter 54 hindurch und weiter in das Innere des Hohlrohres 57 ein. Wird bei eingeschaltetem Antriebsmotor 55 die Spindel 53 rechtsdrehend angetrieben, so verschiebt sich der undrehbar im Maschinengehäuse 13, jedoch axial verschiebbar geführte Pressenstempel 51 in Fig. 1 nach unten. Eine gegensinnige Antriebsbewegung der Spindel 53 führt zu gegensinniger Axialbewegung.

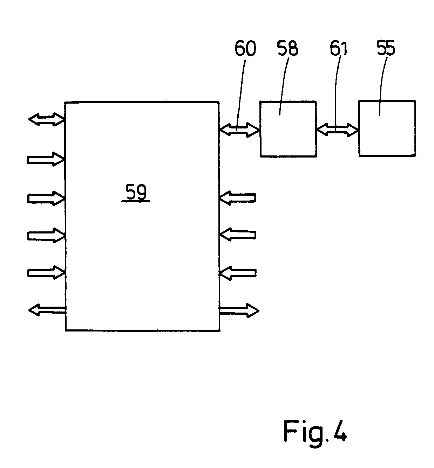

Der Antriebsmotor 55 ist als Drehstrommotor und hierbei insbesondere als Asynchronmotor ausgebildet. Er wird von einem in Fig. 4 nur schematisch angedeuteten Transistorpulswechsel-Frequenzumrichter 58 gespeist, der von einer einen nicht weiter gezeigten Mikroprozessor enthaltenden Steuereinheit 59 steuerbar ist. Einzelheiten der Steuerung, wie sie in Fig. 4 angedeutet ist, sind z.B. in EP-OS 198 248 beschrieben. Die Steuereinheit 59 ist über eine Sammelleitung 60 mit dem Frequenzumrichter 58 verbunden. Der Frequenzumrichter 58 speist den Antriebsmotor 55 über die Sammelleitung 61 und erhält über diese Rückmeldesignale vom Antriebsmotor 55. Die Steuereinheit 59 ist mit zehn verschiedenen Eingängen und Ausgängen dargestellt, auf deren Funktion hier nicht besonders eingegangen werden muß. Der Spindelantrieb 52 weist eine Positioniersteuerung oder eine Drehzahlregelung und ferner eine Drehmomentregelung auf. Hierzu ist der Spindelantrieb 52 in üblicher Weise mit zumindest einem nicht weiter gezeigten Meßwertaufnehmer versehen, der mit der Steuereinheit 59 verknüpft ist und die jeweiligen Istwerte des Spindelantriebs 52 der Steuereinheit 59 zuleitet. Ferner ist der Spindelantrieb 52, z.B. im Bereich der Steuereinrichtung 59, mit einer selbsttätigen Umschaltung der Steuerung des Spindelantriebs 52 von Drehzahlregelung auf Drehmomentregelung versehen, wobei diese Umschaltung von Drehzahlregelung auf Drehmomentregelung spätestens bei Erreichen einer vorgegebenen Pressenstempelposition vor Beginn des Preßarbeitsganges geschieht.

In Fig. 2 sind beidseitig der Werkzeugmaschine 10 zugeführte Werkstücke gezeigt. Dabei wird davon ausgegangen, daß die elektromotorische Presse 12 z.B. in rohrförmige Teile 62 Wellen 63 einpressen soll, woraufhin das fertige Teil 64 abgegeben und weitergereicht wird. Die einzelnen Teile 62 - 64 werden dabei mittels der Handhabungsgeräte 17 und 18 der Presse 12 zugeführt, in Arbeitsposition gebracht, erforderlichenfalls gehalten und danach von der Presse 12 abtransportiert und z.B. an eine nicht weiter gezeigte Bearbeitungseinheit weitergereicht oder in sonstiger Weise abtransportiert. Die jeweiligen Bewegungsabläufe, die bei den Handhabungsgeräten 17 und 18 dazu nötig sind, sind in einer Steuereinrichtung als Programm abgespeichert, gemäß dem die Handhabungsgeräte 17, 18 koordiniert mit dem Spindelantrieb 52 der Presse 12 gesteuert werden, so daß sämtliche Arbeitsschritte automatisch ablaufen. Ist z.B. mittels des Handhabungsgerätes 17 ein Teil 62 auf den Tisch 16 der Presse 12 gelegt worden, und ist mittels des Handhabungsgerätes 18 eine zugeordnete, darin einzupressende Welle 63 in Position gebracht worden, so erfolgt die Ansteuerung des Spindelantriebes 52, der zunächst drehzahlgeregelt den Pressenstempel 51 in Fig. 1 abwärts fährt, bis dieser die dazu vorgegebene Position vor dem eigentlichen Preßarbeitsgang erreicht hat. Sodann erfolgt die selbsttätige Umschaltung von Drehzahlregelung auf Drehmomentregelung, so daß nun durch weiteres Abwärtsbewegen des Pressenstempels 51 genau die erforderliche Preßkraft aufgebracht und aufgrund der steuerungstechnischen Wegbegrenzung der erforderliche Preßweg durchlaufen wird. Dabei wird das Drehmoment in allen Positionen selbsttätig angepaßt. Irgendwelche Anschläge für die Begrenzung der Einpreßtiefe oder sonstige Hilfsmittel sind entbehrlich. Die elektromotorische Presse 12 ist hinsichtlich dieses Spindelantriebes 52 und dessen Steuerung bzw. Regelung außerordentlich einfach, leicht, platzsparend und kostengünstig. Die bauliche Verquickung der Presse 12 mit den Handhabungsgeräten 17,18 zu einer baulichen Einheit führt zu einer außerordentlich einfachen und doch präzis arbeitenden Werkzeugmaschine, die als Arbeitseinheit jederzeit ausbaubar und auch vervielfältigbar ist. Ein Beispiel dafür stellt die in Fig. 2 gestrichelt angedeutete zweite Werkzeugmaschine 44 dar, die z.B. ebenfalls vom jeweiligen Handhabungsgerät 17 bzw. 18 zwecks Zufuhr bzw. Abfuhr von Werkstücken versorgt wird. In gleicher Richtung können weitere Werkzeugmaschinen ebenfalls baukastenmäßig angesetzt werden. Außerdem können z.B. seitlich der in Fig. 2 gezeigten Reihen mit Teilen 62 - 64, somit längs einer horizontalen Reihe aufeinanderfolgend, weitere derartige Werkzeugmaschinen 10 mit zugeordneten Handhabungsgeräten 17,18 angeordnet werden, z.B. so, daß das Handhabungsgerät 17 Werkstücke von einer in Fig. 2 links davon angeordneten Werkzeugmaschine übernimmt und in beschriebener Weise an die Presse 12 abgibt. Entsprechend ist mittels des Handhabungsgerätes 18 ein der Presse 12 entnommenes Werkstück in Fig. 2 nach rechts an eine nächstfolgende Werkzeugmaschine, z.B. Presse 12, weiterreichbar. Auf diese Weise ist eine Werkstückwanderung in horizontaler Reihe von Werkzeugmaschine zu Werkzeugmaschine, und dies voll automatisch gesteuert, möglich.

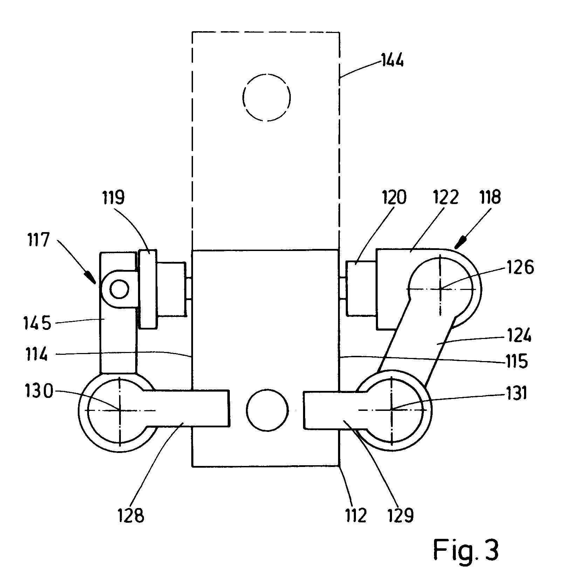

Bei dem in Fig. 3 gezeigten zweiten Ausführungsbeispiel sind für die Teile, die dem ersten Ausführungsbeispiel entsprechen, um 100 größere Bezugszeichen verwendet, so daß dadurch zur Vermeidung unnötiger Wiederholungen auf die Beschreibung des ersten Ausführungsbeispieles Bezug genommen ist.

Beim zweiten Ausführungsbeispiel ist verdeutlicht, daß die elektromotorische Presse 112 auf der in Fig. 3 rechten Außenseite 115 ein gleiches Handhabungsgerät 118 wie beim ersten Ausführungsbeispiel aufweist. Das an der in Fig. 3 linken Außenseite 114 angeordnete Handhabungsgerät 117 weicht jedoch insofern von demjenigen beim ersten Ausführungsbeispiel ab, als im Vergleich zu letzterem der Schwenkarm 23 entfallen ist und lediglich der eine Schwenkarm 128 vorhanden ist, der um die Achse 130 schwenkbar und positionierbar ist. Der Träger dieses Schwenkarmes 128 ist schematisch mit 145 bezeichnet und z.B. fester Bestandteil des Schlittens 119. Ansonsten entspricht das zweite Ausführungsbeispiel dem ersten.

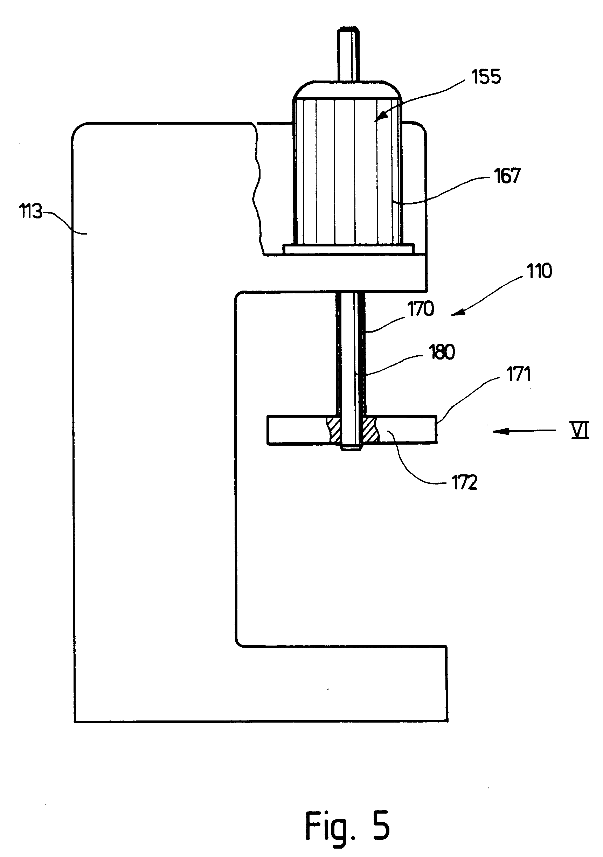

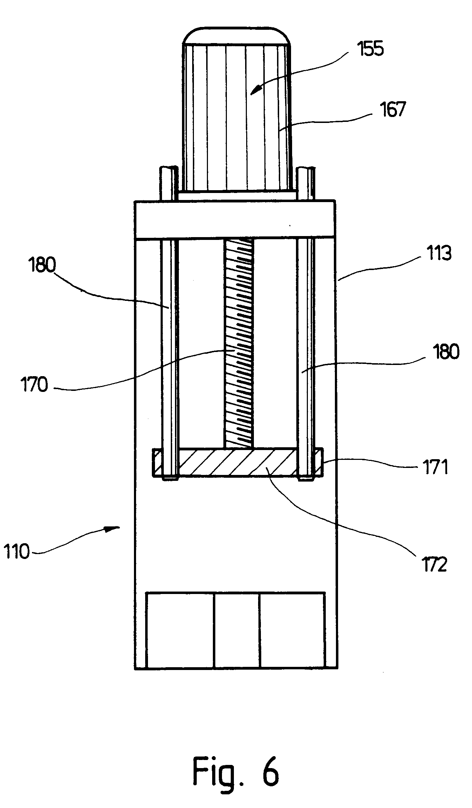

Bei dem in Fig. 5 - 8 gezeigten dritten Ausführungsbeispiel ist der Antrieb 155 als elektromechanischer Linearantrieb ähnlich demjenigen gemäß EP-PS 106 244 ausgebildet. Auch wenn nur ein Linearantrieb 155 gezeigt ist, versteht es sich gleichwohl, daß auch zwei oder mehrere solche Linearantriebe 155 vorgesehen sein können, die im oberen Bereich des Maschinengestells 113 mit zueinander etwa parallelen Achsen nebeneinander plaziert sind. Der elektromechanische Linearantrieb 155 enthält einen Elektromotor, dessen Stator 166 fest mit dem Gehäuse 167 verbunden ist, während dessen Rotor 168 umlaufend drehbar gelagert ist. Der Rotor 168 ist drehfest auf einer dazu koaxialen Hohlwelle 169 angeordnet, die den Rotor durchsetzt. Die Rotorlagerung erfolgt über die Lagerung der Hohlwelle 169. Die Hohlwelle 169 ist von einer koaxialen Spindel 170 durchsetzt, die Außengewinde trägt. Die Spindel 170 ist undrehbar in Bezug auf das Maschinengehäuse 113 der Presse gehalten. Sie ist durch eine darauf sitzende Spindelmutter 154, die in Bezug auf den Rotor 168 axial versetzt ist, hindurchgeführt und steht in Fig. 1 - 8 nach unten hin mit einem wesentlichen Längenabschnitt vor. Am unteren Ende trägt die undrehbare Spindel 170 einen davon translatorisch bewegten Maschinenteil 171, der z.B. aus einer Platte 172 besteht.

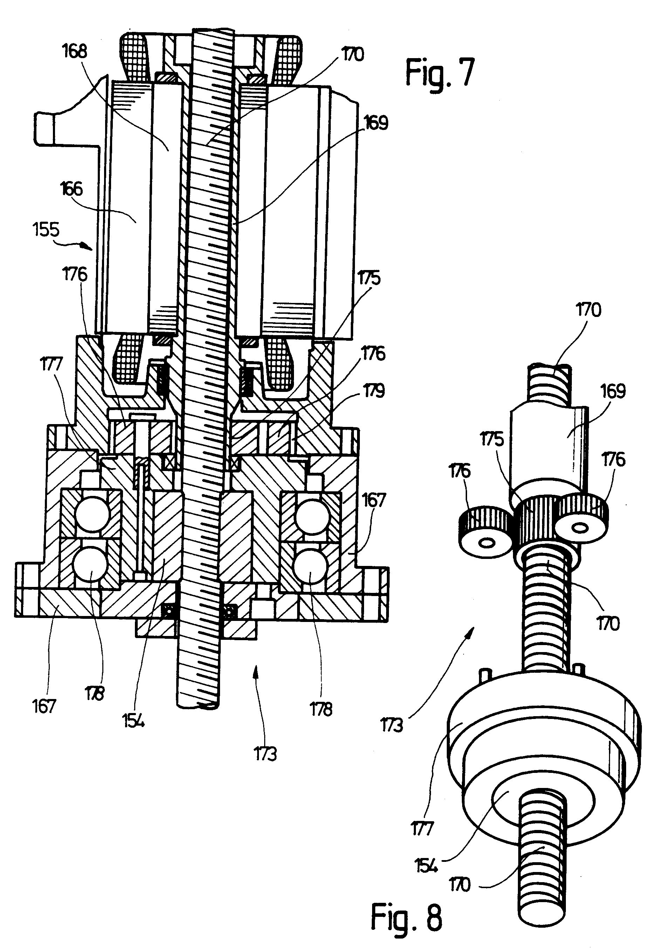

Während bei diesem Ausführungsbeispiel also die Spindel 170 undrehbar und statt dessen zur Betätigung des Maschinenteiles 171 translatorisch auf- und abbeweggbar ist, ist die Spindelmutter 154 drehbar und vom Rotor 168 des Linearantriebes 155 umlaufend angetrieben. Der Antrieb erfolgt über ein dazu koaxiales Planetengetriebe 173. Einzelheiten dieses ergeben sich aus Fig. 7 und 8.

Das Planetengetriebe 173 weist ein Sonnenrad 174 auf, das von der Hohlwelle 169 angetrieben ist. Beim gezeigten Ausführungsbeispiel ist das Sonnenrad 174 aus einer Umfangsverzahnung 175 gebildet, die am in Fig. 7 und 8 unteren Ende der Hohlwelle 169 ausgebildet ist. Mit dem Sonnenrad 174 stehen z.B. drei Planetenräder 176 in Eingriff, die jeweils drehbar an einem Drehgehäuse 177 gehalten sind. Das Drehgehäuse 177 ist mittels Lagern 178 drehbar im Gehäuse 167 gelagert. Es bildet den Steg des Planetengetriebes 173, über den bei diesem Ausführungsbeispiel der Abtrieb erfolgt. In diesem Drehgehäuse 177 ist die Spindelmutter 154 undrehbar aufgenommen und gehalten. Die Spindelmutter 154 ist also Teil des Steges des Planetenradgetriebes 173. Die Planetenräder 176 stehen außen in Eingriff mit einem Hohlzahnrad 179, das fester Bestandteil des Gehäuses 167 ist.

Dadurch, daß die Spindel 170 vom Linearantrieb 155 über das Planetengetriebe 173 angetrieben wird, wird die Drehmomentwandlung vergrößert. Somit ist bei nur geringer Leistung des Elektromotors eine große axiale Preßkraft erzielbar. Es ergeben sich Übersetzungen in der Größenordnung von mindestens 1 zu 4 bis 1 zu 5. Bei Ausbildung der Werkzeugmaschine 110 als Presse ist also mit niedriger Motorleistung ein hoher Pressendruck erzielbar. Dieser kann durchaus bis zu 100 Tonnen betragen. Sieht man mehrere zueinander parallel angeordnete elektromechanische Linearantriebe 155 gleicher Art vor, die allesamt mit ihrer Spindel fest mit dem Maschinenteil 171 verbunden sind und gemeinsam auf dieses arbeiten, läßt sich die erreichbare Preßkraft entsprechend vervielfältigen. Der Aufwand dafür ist gering.

Die Spindel 170 ist in einfacher Weise dadurch undrehbar gehalten, daß die daran befestigte Platte 172 mittels Führungen 180, z.B. zweier vertikaler Führungsstangen, bei der Translationsbewegung geführt und undrehbar gehalten ist.

Bei einem anderen, nicht gezeigten Ausführungsbeispiel ist zumindest ein weiterer Antriebsmotor, z.B. Elektromotor, vorgesehen, der zum wahlweisen Antrieb der Spindel 170 dient. Dieser Antriebsmotor kann wahlweise und nach Wunsch des Benutzers die Spindel 170 unmittelbar oder mittelbar, z.B. über ein Getriebe, eine Kupplung od. dgl., während der Translationsbewegung der Spindel 170 antreiben, und zwar so, daß die Spindel 170 mit zur jeweiligen Umlaufrichtung der angetriebenen Spindelmutter 154 gleichsinniger oder gegensinniger Drehrichtung umlaufend angetrieben wird. Stimmen die Antriebsrichtungen der Spindelmutter 154 und der Spindel 170 überein, bedeutet dies eine Verlangsamung der Translationsgeschwindigkeit, mit der die Spindel 170 in Achsrichtung bewegt wird. Wird die Spindel 170 dagegen gegensinnig zur Umlaufrichtung der angetriebenen Spindelmutter 154 umlaufend angetrieben, bedeutet dies eine Erhöhung der Translationsgeschwindigkeit bei der Translationsbewegung der Spindel 170. Eine solche ist z.B. dann wünschenswert, wenn nach vollzogenem Preßarbeitsgang z.B. die Spindel 170 im Eilgang in eine Ausgangsstellung zurückbewegt werden soll. Für diesen Fall läßt sich dieser Eilrücklauf dadurch erzielen, daß die Spindel 170 vom zugeordneten Antriebsmotor gegensinnig zur Umlaufrichtung der Spindelmutter 154 angetrieben wird. Analog läßt sich auch ein Eilvorlauf erzielen mit Eilzustellung, wobei nach Erreichen der Arbeitsposition oder kurz vorher der zusätzliche Antriebsmotor für den Drehantrieb der Spindel 170 abgeschaltet wird und daraufhin dann der Arbeitshub erfolgen kann.

## Patentansprüche

1. Werkzeugmaschine, deren Maschinenteil (171,172) mit vertikaler Arbeitsachse mittels eines elektromechanischen Linearantriebes (155) mit mindestens einer Spindel (170) und Spindelmutter (154) betätigbar ist, insbesondere elektromotorische Presse, **dadurch gekennzeichnet**, daß die Spindel (170) undrehbar in bezug auf das Maschinengehäuse (113) gehalten oder umlaufend angetrieben ist und translatorisch bewegt und durch die Spindelmutter (154) und den Rotor (168) eines Elektromotors hindurchgeführt ist und an einem Ende den davon translatorisch bewegten Maschinenteil (171), z.B. eine Platte (172), trägt und daß die Spindelmutter (154) vom Rotor (168) über ein dazu koaxiales Planetengetriebe (173) angetrieben ist.

2. Werkzeugmaschine nach Anspruch 1, **dadurch gekennzeichnet,** daß der Elektromotor eine Hohlwelle (169) aufweist, auf der der Rotor (168) drehfest gehalten ist und die von der Spindel (170) koaxial durchsetzt ist.

3. Werkzeugmaschine nach Anspruch 1 oder 2 , **dadurch gekennzeichnet,** daß das Planetengetriebe (173) ein vom Rotor (168), insbesondere von der Hohlwelle (169), angetriebenes Sonnenrad (174) aufweist, mit dem an einem dazu koaxialen, den Steg des Planetengetriebes (173) bildenden Drehgehäuse (177) drehbar gehaltene Planetanräder (176) in Eingriff stehen, die in einem maschinenfest gehaltenen Hohlzahnrad (179) umlaufen, und daß die Spindelmutter (154) drehfest im Drehgehäuse (177) gehalten und dieses im Gehäuse (167) des Linearantriebes (155) umlaufend drehbar gelagert ist.

4. Werkzeugmaschine nach Anspruch 3, **dadurch gekennzeichnet,** daß das Hohlzahnrad (179) fest mit dem Gehäuse (167) des Linearantriebes (155) verbunden ist.

5. Werkzeugmaschine nach einem der Ansprüche 1 - 4, **dadurch gekennzeichnet,** daß das Sonnenrad (174) des Planetengetriebes (173) aus einer Umfangsverzahnung (175) gebildet ist, die an einem Ende der Hohlwelle (169) vorgesehen ist.

6. Werkzeugmaschine nach einem der Ansprüche 1 - 5, **gekennzeichnet durch** zwei oder mehrere, zueinander parallele elektromechanische Linearantriebe (155) mit jeweils über ein koaxiales Planetengetriebe (173) umlaufend angetriebener Spindelmutter (154) und davon translatorisch bewegter Spindel (170), wobei alle Spindeln (170) gemeinsam drehfest am davon bewegten Maschinenteil (171) angreifen.

7. Werkzeugmaschine nach einem der Ansprüche 1 - 6, **dadurch gekennzeichnet,** daß der translatorisch bewegte Maschinenteil (171) mittels Führungen (180), z.B. Führungsstangen, geführt und undrehbar gehalten ist, die etwa parallel zur mindestens einen Spindel (170) gerichtet sind.

8. Werkzeugmaschine nach einem der Ansprüche 1 - 7, **dadurch gekennzeichnet,** daß zumindest ein weiterer Antriebsmotor vorgesehen ist, der wahlweise und nach Wunsch einschaltbar ist und dann die Spindel (170) unmittelbar oder mittelbar, z.B. über ein Getriebe, in der einen oder anderen Drehrichtung antreibt.

9. Werkzeugmaschine nach Anspruch 8, **dadurch gekennzeichnet,** daß der Antriebsmotor für einen Eilvorlauf oder Eilrücklauf die Spindel (170) mit zur jeweiligen Umlaufrichtung der angetriebenen Spindelmutter (154) gegensinniger Drehrichtung antreibt.

10. Werkzeugmaschine nach einem der Ansprüche 1 - 9, **dadurch gekennzeichnet**, daß zumindest auf einer der beidseitigen lotrechten Maschinenseiten (14,15; 114,115) mindestens ein in zur Arbeitsachse (11) zumindest im wesentlichen paralleler Richtung verschiebbarer Schlitten (19,20;119,120) mit mindestens einem Handhabungsgerät (17,18; 117,118) daran angeordnet ist, das zumindest einen Schwenkarm (23,24,28,29;124,128,129) aufweist, der um eine zur Arbeitsachse (11) zumindest im wesentlichen parallele Achse (25,26,30,31;126,130,131) und dabei bis in den Bereich der Arbeitsachse (11) und Arbeitsbereich der Maschine hineinschwenkbar ist.

11. Werkzeugmaschine nach einem der Ansprüche 1 bis 10, **dadurch gekennzeichnet**, daß der mindestens eine Schlitten (19,20; 119,120) und/oder der mindestens eine Schwenkarm (23,24,28,29; 124,128,129) in Verschieberichtung bzw. Schwenkrichtung in der jeweils gewünschten Position positionierbar ist.

12. Werkzeugmaschine nach einem der Ansprüche 1 - 11, **dadurch gekennzeichnet**, daß auf beiden lotrechten Maschinenseiten (14,15;114,115) jeweils mindestens ein Schlitten (19,20;119,120) mit jeweils mindestens einem Handhabungsgerät (17,18;117,118) angeordnet ist.

13. Werkzeugmaschine nach einem der Ansprüche 1 -12, **dadurch gekennzeichnet**, daß das Handhabungsgerät (17,18;118) zumindest einer lotrechten Maschinenseite (14,15;115) zwischen dem Schwenkarm (28, 29;129) und der schlittenseitigen Halterung (21,22;122) zumindest einen weiteren, schwenkbeweglichen Schwenkarm (23,24;124) aufweist.

14. Werkzeugmaschine nach einem der Ansprüche 1 -13, **dadurch gekennzeichnet**, daß das jeweilige Handhabungsgerät (17,18) am freien Ende des Schwenkarmes (28,29) jeweils eine Einrichtung, z.B. einen Greifer (33,34), eine Greifzange od.dgl., aufweist.

15. Werkzeugmaschine nach einem der Ansprüche 1 -14, **dadurch gekennzeichnet**, daß das jeweilige Handhabungsgerät (17) zur Schwenkbetätigung je Schwenkarm (23,28) einen elektromotorischen Schwenkantrieb (27,32) aufweist.

16. Werkzeugmaschine nach einem der Ansprüche 1 -15, **dadurch gekennzeichnet**, daß der jeweilige Schlitten (19,20) längs einer Vertikalführung (35,36), z.B. längs zweier vertikaler Führungsstangen (37,38), verschiebbar gehalten und geführt ist, die seitlich am Maschinengehäuse (13) gehalten ist.

17. Werkzeugmaschine nach einem der Ansprüche 1 -16, **dadurch gekennzeichnet**, daß der jeweilige Schlitten (19) einen Linearantrieb (39), insbesondere einen elektromotorisch betätigten Spindelantrieb mit Spindel (40) und Spindelmutter (41), aufweist.

18. Werkzeugmaschine nach Anspruch 17, **dadurch gekennzeichnet**, daß die Spindel mittels des Elektromotors umlaufend angetrieben ist und am Maschinengehäuse (13) gelagert ist und daß die Spindelmutter am Schlitten (19) undrehbar gehalten ist.

19. Werkzeugmaschine nach Anspruch 17, **dadurch gekennzeichnet**, daß die Spindelmutter (41) im Schlitten (19) drehbar gelagert und vom dazu koaxialen Rotor des am Schlitten (19) angeordneten Elektromotors umlaufend angetrieben ist und daß die Spindel (40) undrehbar am Maschinengehäuse (13) gehalten ist und durch die Spindelmutter (41) hindurchgeführt ist, die darauf läuft.

20. Werkzeugmaschine nach einem der Ansprüche 17 bis 19, **dadurch gekennzeichnet**, daß der jeweilige Elektromotor aus einem Drehstrommotor, insbesondere Asynchronmotor, gebildet ist.

21. Werkzeugmaschine nach einem der Ansprüche 17 bis 20, **dadurch gekennzeichnet**, daß der jeweilige Linearantrieb (39), insbesondere elektromotorische Spindelantrieb, eine Drehmoment- und/oder Drehzahlregelung hat.

22. Werkzeugmaschine nach einem der Ansprüche 1 bis 21, **gekennzeichnet durch** eine weitere, insbesondere rückseitig angeordnete, Werkzeugmaschine (44), die im Arbeitsbereich des mindestens einen Handhabungsgerätes (17,18) angeordnet ist, welches zugleich auch dieser Werkzeugmaschine (44) zugeordnet ist.

23. Werkzeugmaschine nach einem der Ansprüche 1 - 22, **dadurch gekennzeichnet**, daß die Spindelmutter (54) drehfest am Pressenstempel (51) angeordnet ist und die Spindel (53) mittels des Elektromotors (55) umlaufend angetrieben ist.

24. Werkzeugmaschine nach einem der Ansprüche 1 - 23, **dadurch gekennzeichnet**, daß der Pressenstempel (51) zumindest auf einem Teil seiner Länge als Hohlrohr (57) ausgebildet ist, in dem die Spindelmutter (54)fest angebracht ist, wobei die Spindel (53) in das Hohlrohr (57) und in die Spindelmutter (54) darin koaxial eingreift.

25. Werkzeugmaschine nach einem der Ansprüche 1 -24, **dadurch gekennzeichnet**, daß die Spindel (53) unmittelbar oder mittelbar über ein Getriebe vom Elektromotor (55) angetrieben ist.

26. Werkzeugmaschine nach einem der Ansprüche 1 -25 , **dadurch gekennzeichnet**, daß der Elektromotor (55) koaxial zur Spindel (53) angeordnet ist.

27. Werkzeugmaschine nach einem der Ansprüche 1 - 26 , **dadurch gekennzeichnet**, daß der Rotor (56) des Elektromotors (55) unmittelbar mit der Spindel (53) verbunden ist, vorzugsweise die Spindel (53) in den Rotor (56) hineingeführt oder durch diesen hindurchgeführt ist.

28. Werkzeugmaschine nach einem der Ansprüche 1 - 27 , **dadurch gekennzeichnet**, daß der Elektromotor (55) aus einem Drehstrommotor, insbesondere Asynchronmotor, gebildet ist.

29. Werkzeugmaschine nach einem der Ansprüche 1 - 28, **dadurch gekennzeichnet**, daß der Drehstrommotor, insbesondere Asynchronmotor, von einem Frequenzumrichter (58) gespeist ist, der von einer einen Mikroprozessor enthaltenden Steuereinheit (59) steuerbar ist.

30. Werkzeugmaschine nach einem der Ansprüche 1 - 29 , **dadurch gekennzeichnet**, daß der Spindelantrieb (52), insbesondere der Elektromotor (55), eine Positioniersteuerung oder eine Drehzahlregelung aufweist.

31. Werkzeugmaschine nach einem der Ansprüche 1 - 30 , **dadurch gekennzeichnet**, daß der Spindelantrieb (52), insbesondere der Elektromotor (55), eine Drehmomentregelung aufweist.

32. Werkzeugmaschine nach einem der Ansprüche 1 - 31, **dadurch gekennzeichnet**, daß der Spindelantrieb (52), insbesondere der Elektromotor (55),einen mit der Steuereinheit (59) verknüpften Meßwertgeber aufweist.

33. Werkzeugmaschine nach einem der Ansprüche 1 - 32, **gekennzeichnet durch** eine selbsttätige Umschaltung der Steuerung des Spindelantriebes (52), insbesondere des Elektromotors (55), von Drehzahlregelung auf Drehmomentregelung spätestens bei Erreichen einer vorgegebenen Pressenstempelposition vor dem Preßarbeitsgang.

34. Werkzeugmaschine nach einem der Ansprüche 1 - 33, **gekennzeichnet durch** eine steuerungstechnische Wegbegrenzung des Spindelantriebs (52).

## Claims

1. Machine tool, in which the machine part (171, 172) with vertical working axis may be operated by means of an electromechanical linear drive (155) having at least one spindle (170) and spindle nut (154), in particular an electromotive press, characterised in that said spindle (170) is non-rotatably supported in relation to the machine housing (113) or is rotated and moved in a translatory manner, and is passed through said spindle nut (154) and the rotor (168) of an electric motor, and at one end supports said machine part (171) moved in a translatory manner thereby; and that said spindle nut (154) is driven by said rotor (168) via a planetary gear (173) coaxial thereto.

2. Machine tool according to Claim 1, characterised in that the electric motor has a hollow shaft (169), on which the rotor (168) is rotationally fixed and through which the spindle (170) passes coaxially.

3. Machine tool according to Claim 1 or 2, characterised in that the planetary gear (173) has a sun wheel (174) driven by the rotor (168), in particular by the hollow shaft (169), rotatably supported planet wheels (176) engaging with said sun wheel (174) at a coaxial rotary housing (177) forming the web of said planetary gear (173), said planet wheels (176) rotating in a machine-fixed hollow gear (179); and that the spindle nut (154) is arranged to be rotationally fixed in said rotary housing (177) and the latter is rotatably arranged in the housing (167) of the linear drive (155).

4. Machine tool according to Claim 3, characterised in that the hollow gear (179) is fixedly connected to the housing (167) of the linear drive (155).

5. Machine tool according to one of Claims 1-4, characterised in that the sun wheel (174) of the planetary gear (173) is formed from a peripheral tooth arrangement (175), which is provided at one end of the hollow shaft (169).

6. Machine tool according to one of Claims 1-5, characterised by two or several parallel electromechanical linear drives (155), each having spindle nuts (154) rotated by means of a coaxial planetary gear (173) and spindles (170) moved in a translatory manner thereby, whereby all spindles (170) engage jointly in the machine part (171) driven thereby so as to be rotationally fixed.

7. Machine tool according to one of Claims 1-6, characterised in that the machine part (171) moved in a translatory manner is guided and non-rotatably held by means of guideways (180), e.g. guide rods, which are directed approximately parallel to at least one spindle (170).

8. Machine tool according to one of Claims 1-7, characterised in that at least one further drive motor is provided, which may be connected selectively and as desired to drive the spindle (170) directly or indirectly, e.g. via a gear, in one direction of rotation or other.

9. Machine tool according to Claim 8, characterised in that, for rapid forward or backward movement, the drive motor drives the spindle (170) in the opposite direction of rotation to the respective direction of rotation of the drive spindle nut (154).

10. Machine tool according to one of Claims 1-9, characterised in that at least on one of the machine outside faces (14, 15; 114, 115) perpendicular on both sides, at least one cradle (19, 20; 119, 120), movable in at least a substantially parallel direction to the working axis (11) and having at least one handling device (17, 18; 117, 118) is arranged thereon, said handling device having at least one swivel arm (23, 24, 28, 29; 124, 128, 129), which may be swung about an axis (25, 26, 30, 31; 126, 130, 131) substantially parallel to the working axis (11) and may thereby be swung into the area of said working axis (11) and the work area of the machine.

11. Machine tool according to one of Claims 1 to 10, characterised in that the respective at least one cradle (19, 20; 119, 120) and/or the respective at least one swivel arm (23, 24, 28, 29; 124, 128, 129) may be moved in sliding or swivelling direction and placed in the respective desired position.

12. Machine tool according to one of Claims 1-11, characterised in that at least one cradle (19, 20; 119, 120), each having at least one handling device (17, 18; 117, 118), is arranged in each case on the two perpendicular machine faces (14, 15; 114, 115).

13. Machine tool according to one of Claims 1-12, characterised in that the handling device (17, 18; 118) on at least one perpendicular machine face (14, 15; 115) is provided with at least one further swinging swivel arm (23, 24, 124) between the swivel arm (28, 29; 129) and the bracket (21, 22; 122) on the cradle side.

14. Machine tool according to one of Claims 1-13, characterised in that the respective handling device (17, 18) is provided with a respective means, e.g. a gripping means (33, 34), gripping pliers or similar, on the free end of the swivel arm (28, 29).

15. Machine tool according to one of Claims 1-14, characterised in that the respective handling device (17) is provided with an electromotive swivel drive (27, 32) to swing each swivel arm (23, 28).

16. Machine tool according to one of Claims 1-15, characterised in that the respective cradle (19, 20) is slidably held and guided along a vertical guideway (35, 36), e.g. along two vertical guideways (37, 38), which is arranged on the side of the machine housing (13).

17. Machine tool according to one of Claims 1-16, characterised in that the respective cradle (19) is provided with a linear drive (39), in particular an electromotively operated spindle drive with spindle (40) and spindle nut (41).

18. Machine tool according to Claim 17, characterised in that the spindle is rotated by means of the electric motor and is supported on the machine housing (13); and that the spindle nut is non-rotatably supported on the cradle (19).

19. Machine tool according to Claim 17, characterised in that the spindle nut (41) is rotatably arranged in the cradle (19) and is rotated by the coaxial rotor of the electric motor arranged on said cradle (19); and that the spindle (40) is non-rotatably supported on the machine housing (13) and is passed through said spindle nut (41), which runs thereon.

20. Machine tool according to one of Claims 17 to 19, characterised in that the respective electric motor comprises a rotary current motor, in particular an asynchronous motor.

21. Machine according to one of Claims 17 to 20, characterised in that the respective linear drive (39), in particular electromotive spindle drive, has a torque and/or speed control.

22. Machine tool according to one of Claims 1 to 21, characterised by a further machine tool (44), in particular arranged on the rear side, which is disposed in the work area of the at least one handling device (17, 18), which at the same time also serves this machine tool (44).

23. Machine tool according to one of Claims 1-22, characterised in that the spindle nut (54) is arranged on the press slide (51) so as to be rotationally fixed and the spindle (53) is rotated by means of the electric motor (55).

24. Machine tool according to one of Claims 1-23, characterised in that on at least one portion of its length, the press slide (51) is in the form of a hollow tube (57), in which the spindle nut (54) is fixedly attached, the spindle (53) thereby engaging coaxially in said hollow tube (57) and in the spindle nut (54).

25. Machine tool according to one of Claims 1-24, characterised in that the spindle (53) is driven by the electric motor (55) directly or indirectly via a gear.

26. Machine tool according to one of Claims 1-25, characterised in that the electric motor (55) is arranged coaxially to the spindle (53).

27. Machine tool according to one of Claims 1-26, characterised in that the rotor (56) of the electric motor (55) is directly connected to the spindle (53), said spindle (53) preferably being guided into said rotor (56) or passed therethrough.

28. Machine tool according to one of Claims 1-27, characterised in that the electric motor (55) is formed from a rotary current motor, in particular asynchronous motor.

29. Machine tool according to one of Claims 1-28, characterised in that the rotary current motor, in particular asynchronous motor, is fed by a frequency inverter (58), which may be controlled by a control unit (59) containing a microprocessor.

30. Machine tool according to one of Claims 1-29, characterised in that the spindle drive (52), in particular the electric motor (55), is provided with a position control or speed control means.

31. Machine tool according to one of Claims 1-30, characterised in that the spindle drive (52), in particular the electric motor (55), is provided with a torque control means.

32. Machine tool according to one of Claims 1-31, characterised in that the spindle drive (52), in particular the electric motor (55), is provided with a transducer linked to the control unit (59).

33. Machine tool according to one of Claims 1-32, characterised by an automatic switchover of the control of the spindle drive (52), in particular of the electric motor (55), from speed control to torque control at the latest when a preset press slide position has been reached prior to the pressing work cycle.

34. Machine tool according to one of Claims 1-33, characterised by a path restriction control system of the spindle drive (52).

## Revendications

1. Machine-outil, dont la pièce machine (171, 172) dotée d'un axe de travail vertical peut être commandée par un entraînement linéaire électromécanique (155) avec au moins une broche (170) et un écrou de broche (154), en particulier une presse électromotrice, caractérisée en ce que la broche (170) est montée sans pouvoir tourner par rapport au boîtier (113) de la machine ou est entraînée en rotation et déplacée en translation, est guidée à travers l'écrou (154) et le rotor (168) d'un moteur électrique et porte à une extrémité la pièce de machine (171) déplacée en translation par celui-ci, par exemple, une plaque (172) et l'écrou (154) est entraîné par le rotor (168) via un engrenage planétaire qui lui est coaxial (173).

2. Machine-outil selon la revendication 1, caractérisée en ce que le moteur électrique présente un arbre creux (169) sur lequel le rotor (168) est maintenu sous pouvoir tourner et qui est traversé coaxialement par la broche (170).

3. Machine-outil selon la revendication 1 ou 2, caractérisée en ce que l'engrenage planétaire (173) présente une roue solaire (174) entraînée par le rotor (168), en particulier par l'arbre creux (169), roue solaire sur laquelle s'engrène des roues planétaires (176) montées à rotation sur un boîtier rotatif (177) coaxial à cet effet et formant l'élément intermédiaire de l'engrenage planétaire (173), ces roues planétaires tournant dans une roue à denture interne (179) maintenue fixe sur la machine, et l'écrou (154) de la broche est monté dans le boîtier rotatif (177) de manière à ne pouvoir tourner et celui-ci est monté à rotation dans le boîtier (167) de l'entraînement linéaire (155).

4. Machine-outil selon la revendication 3, caractérisée en ce que la roue dentée creuse (179) est reliée fixe au boîtier (167) de l'entraînement linéaire (155).

5. Machine-outil selon l'une quelconque des revendications 1 à 4, caractérisée en ce que la roue solaire (174) de l'entraînement planétaire (173) est formée d'une denture périphérique (175) qui est prévue à une extrémité de l'arbre creux (169).

6. Machine-outil selon l'une quelconque des revendications 1 à 5, caractérisée en ce que deux ou plusieurs entraînements linéaires électromécaniques parallèles (155) s'enclenchent avec respectivement un écrou (154) entraîné en rotation via un engrenage planétaire coaxial (173) et une broche (170) déplacée en translation par celui-ci, toutes les broches (170) s'engrenant conjointement sans pouvoir tourner sur la pièce (171) de la machine déplacée par ces broches.

7. Machine-outil selon l'une quelconque des revendications 1 à 6, caractérisée en ce que la pièce (170) de la machine déplacée en translation est guidée via des glissières (180), par exemple, des tiges de guidage, et retenue sans pouvoir tourner, ces tiges étant dirigées plus ou moins parallèlement par rapport à au moins une broche (170).

8. Machine-outil selon l'une quelconque des revendications 1 à 7, caractérisée en ce qu'il est prévu au moins un autre moteur d'entraînement qui peut être connecté au choix et entraîne la broche (170) directement ou indirectement, par exemple, via une transmission dans l'un ou l'autre sens de rotation.

9. Machine-outil selon la revendication 8, caractérisée en ce que le moteur d'entraînement entraîne la broche (170) dans un stade d'avance accéléré ou dans un stade de recul accéléré, dans le sens de rotation inverse au sens de rotation respectif de l'écrou (154) entraîné.

10. Machine-outil selon l'une quelconque des revendications 1 à 9, caractérisé en ce qu'au moins sur l'un des deux côtés verticaux de la machine (14, 15; 114, 115) est agencé au moins un chariot (19, 20, 119, 120) qui peut être déplacé au moins en substance parallèlement vis-à-vis de l'axe de travail (11) et qui est doté d'au moins un appareil de manipulation (17, 18; 117, 118) qui présente au moins un bras pivotant (23, 24, 28, 29; 124, 128, 129) qui peut pivoter autour d'un axe (25, 26, 30, 31; 126, 130, 131) au moins sensiblement parallèle à l'axe de travail (11) jusque dans la zone de l'axe de travail et de la zone de travail de la machine (11).

11. Machine-outil selon l'une quelconque des revendications 1 à 10, caractérisée en ce qu'un chariot au moins (19, 20; 119, 120) et/ou un bras pivotant au moins (23, 24, 28, 29; 124, 128, 129) peuvent être disposés dans la position respectivement souhaitée dans le sens de déplacement ou dans le sens de pivotement.

12. Machine-outil selon l'une quelconque des revendications 1 à 11, caractérisée en ce que sur les deux côtés de la machine verticaux (14, 15; 114; 115), respectivement, au moins un chariot (19, 20; 119, 120) est agencé avec, respectivement, au moins un appareil de manipulation (17, 18; 117, 118).

13. Machine-outil selon l'une quelconque des revendications 1 à 12, caractérisée en ce que l'appareil de manipulation (17, 18; 118) présente au moins sur un côté vertical de la machine (14, 15; 115) entre le bras pivotant (28, 29; 129) et le support côté chariot (21, 22; 122) au moins un autre bras pivotant susceptible de se déplacer selon un mouvement de pivotement (23, 24; 124).

14. Machine-outil selon l'une quelconque des revendications 1 à 13, caractérisée en ce que l'appareil de manipulation respectif (17, 18) présente, à l'extrémité libre du bras pivotant (28, 29), respectivement, un dispositif, par exemple, un dispositif de préhension (33, 34), une pince ou quelque chose d'analogue.

15. Machine-outil selon l'une quelconque des revendications 1 à 14, caractérisée en ce que l'appareil de manipulation respectif (17) présente un entraînement de pivotement électromoteur (27, 32) pour faire pivoter chaque bras pivotant (23, 28).

16. Machine-outil selon l'une quelconque des revendications 1 à 15, caractérisée en ce que le chariot respectif (19, 20) est maintenu et guidé en sorte de pouvoir se déplacer le long d'une glissière verticale (35, 36), par exemple, le long de deux tiges de guidage verticales (37, 38), lesquelles tiges sont montées latéralement sur le boîtier (13) de la machine.

17. Machine-outil selon l'une quelconque des revendications 1 à 16, caractérisée en ce que le chariot respectif (19) présente un entraînement linéaire (39), en particulier un entraînement commandé par un moteur électrique avec une broche (40) et un écrou (41).

18. Machine-outil selon la revendication 17, caractérisée en ce que la broche est entraînée en rotation par le moteur électrique et est montée sur le boîtier (13) de la machine et l'écrou est monté sur le chariot (19) sans pouvoir tourner.

19. Machine-outil selon la revendication 17, caractérisée en ce que l'écrou (41) de la broche est monté à rotation dans le chariot (19) et est entraîné en rotation par le rotor coaxial du moteur électrique agencé sur le chariot (19), et la broche (40) est montée sur le boîtier (13) de la machine sans pouvoir tourner et traverse l'écrou (41) qui se déplace sur elle.

20. Machine-outil selon l'une quelconque des revendications 17 à 19, caractérisée en ce que le moteur électrique respectif est formé d'un moteur triphasé, en particulier d'un moteur asynchrone.

21. Machine-outil selon l'une quelconque des revendications 17 à 20, caractérisé en ce que l'entraînement linéaire respectif (39), en particulier l'entraînement à broche électromoteur, est réglé en termes de moment de torsion et/ou de nombre de tours.

22. Machine-outil selon l'une quelconque des revendications 1 à 21, caractérisé par une autre machine-outil (44) agencée en particulier à l'arrière, dans la zone de travail d'au moins un appareil de manipulation (17, 18) qui est affecté simultanément également à cette machine-outil.

23. Machine-outil selon l'une quelconque des revendications 1 à 22, caractérisée en ce que l'écrou (54) est agencé sans pouvoir tourner sur le poinçon (51) de la presse et la broche (53) est entraînée à rotation à l'aide du moteur électrique (55).

24. Machine-outil selon l'une quelconque des revendications 1 à, 23, caractérisée en ce que le poinçon (51) de la presse est conformé au moins sur une partie de sa longueur en tube creux (57) dans lequel l'écrou (54) est monté fixe, la broche (53) s'enclenchant dans le tube creux (57) et dans l'écrou (54) qui s'y trouve coaxialement.

25. Machine-outil selon l'une quelconque des revendications 1 à 24, caractérisée en ce que la broche (53) est entraînée directement ou indirectement via une transmission de moteur électrique (55).

26. Machine-outil selon l'une quelconque des revendications 1 à 25, caractérisée en ce que le moteur électrique (55) est agencé coaxialement vis-à-vis de la broche (53).

27. Machine-outil selon l'une quelconque des revendications 1 à 26, caractérisée en ce que le rotor (56) du moteur électrique (55) est relié directement à la broche (53), de préférence la broche (53) est guidée dans le rotor (56) ou traverse celui-ci.

28. Machine-outil selon l'une quelconque des revendications 1 à 27, caractérisée en ce que le moteur électrique (55) est formé d'un moteur triphasé, en particulier d'un moteur asynchrone.

29. Machine-outil selon l'une quelconque des revendications 1 à 28, caractérisé en ce que le moteur triphasé, en particulier le moteur asynchrone, est alimenté par un changeur de fréquence (58) qui peut être commandé par une unité de commande (59) contenant un microprocesseur.

30. Machine-outil selon l'une quelconque des revendications 1 à 29, caractérisée en ce que l'entraînement à broche (52), en particulier le moteur électrique (55), présente une commande de position ou un système de réglage du nombre de tours.

31. Machine-outil selon l'une quelconque des revendications 1 à 3, caractérisée en ce que l'entraînement à broche (52), en particulier le moteur électrique (55), présente un système de réglage du moment de torsion.

32. Machine-outil selon l'une quelconque des revendications 1 à 31, caractérisée en ce que l'entraînement à broche (52), en particulier le moteur électrique (55), présente un capteur de mesure relié à l'unité de commande (59).

33. Machine-outil selon l'une quelconque des revendications 1 à 32, caractérisée par un passage automatique de la commande de l'entraînement à broche (52), en particulier du moteur électrique (55), du réglage du nombre de tours au réglage du moment de torsion, au plus tard lorsqu'est atteinte une position du poinçon de la pièce prédéterminée précédant l'opération de compression.

34. Machine-outil selon l'une quelconque des revendications 1 à 33, caractérisée par une limitation de la course de l'entraînement (52) de la broche par une technique de commande.
